# EUROPEAN PATENT SPECIFICATION

(11) **EP 1 828 550 B1**
(45) Date of publication and mention of the grant of the patent: **21.08.2013**
(21) Application number: 05825495.4
(22) Date of filing: 22.11.2005
(51) Int. Cl.: F01K 25/08, F01K 1/00, F01K 15/00, F01K 25/10, F22B 1/18, F28B 1/02

(54) **METHOD AND APPARATUS FOR POWER GENERATION USING WASTE HEAT**
VERFAHREN UND VORRICHTUNG ZUR ENERGIEERZEUGUNG UNTER VERWENDUNG VON ABWÄRME
PROCEDE ET APPAREIL DE PRODUCTION D'ENERGIE AVEC CHALEUR RESIDUELLE

(30) Priority: 30.11.2004 US 112
(43) Date of publication of application: 05.09.2007
(73) Proprietor: United Technologies Corporation, Hartford, Connecticut 06103 (US)
(72) Inventor: SUNDEL, Timothy, N., West Hartford, CT 06117 (US)
(74) Representative: Leckey, David Herbert
(86) International application number: PCT/US2005/042441
(87) International publication number: WO 2006/060253

(56) References cited:
- WO-A1-01/62589
- WO-A1-91/16526
- DE-A1- 3 245 351
- DE-A1- 10 227 709
- DE-C- 685 009
- GB-A- 595 668
- GB-A- 669 945
- GB-A- 743 037
- GB-A- 1 159 090
- US-A- 4 753 077
- US-A- 5 548 957
- US-A- 5 799 484

## Description

### BACKGROUND OF THE INVENTION

### 1. Technical Field

The present invention relates to methods and apparatus for power generation using waste heat from a power plant in general, and to those methods and apparatus that utilize an organic Rankine cycle in particular.

### 2. Background Information

Marine and land based power plants can produce exhaust products in a temperature range of 350-1850°F (177 - 1010°C). In most applications, the exhaust products are released to the environment and the thermal energy is lost. In some instances, however, the thermal energy is further utilized. For example, the thermal energy from the exhaust of an industrial gas turbine engine (IGT) has been used as the energy source to drive a Rankine cycle system.

Rankine cycle systems can include a turbine coupled to an electrical generator, a condenser, a pump, and a vapor generator. The vapor generator is subjected to a heat source (e.g., geothermal energy source). The energy from the heat source is transferred to a fluid passing through the vapor generator. The energized fluid subsequently powers the turbine. After exiting the turbine, the fluid passes through the condenser and is subsequently pumped back into the vapor generator. In land-based applications, the condenser typically includes a plurality of airflow heat exchangers that transfer the thermal energy from the water to the ambient air.

In the 1970's and 1980's the United States Navy investigated a marine application of a Rankine cycle system, referred to as the Rankine Cycle Energy Recovery (RACER) System. The RACER system, which utilized high-pressure steam as the working medium, was coupled to the drive system to augment propulsion horsepower. RACER could not be used to power any accessories because it as coupled to the drive system; i.e., if the drive system was not engaged, neither was the RACER system. The RACER system was never fully implemented and the program was cancelled because of problems associated with using high-pressure steam in a marine application.

What is needed is a method and apparatus for power generation using waste heat from a power plant that can be used in a marine environment, and one that overcomes the problems associated with the prior art systems.
Apparatus having the features of the preamble of claim 1 is disclosed in DE-658009 C or in GB-1159090A.

### SUMMARY OF THE INVENTION

According to the present invention, a method and apparatus for generating power aboard a marine vessel is provided as set forth in claims 10 and 1 respectively.
The present method and apparatus provides significant advantages. For example, the range of a marine vessel that bums liquid fossil fuel within its power plant is typically dictated by the fuel reserve it can carry. In most modem marine vessels, a portion of the fuel reserve is devoted to running a power plant that generates electrical energy. Hence, both the propulsion needs and the electrical energy needs draw on the fuel reserve. The present method and apparatus decreases the fuel reserve requirements by generating electricity using waste heat generated by the power plant of the vessel rather than fossil fuel. Hence, the vessel is able to carry less fuel and have the same range, or carry the same amount of fuel- and have a greater range. In addition, less fuel equates to lower weight, and lower weight enables increased vessel speed.
If one considers the amount of fossil fuel that would be required to produce the electrical energy that can be created by the present method and apparatus via waste heat, it is clear that several other advantages are provided by the present invention. For example, the weight of the fuel required to produce "N" units of electrical power using the vessel's existing main or auxiliary power plants far exceeds the weight of a present ORC device capable of producing the same "N" units of electrical power via waste heat. In addition, consumption of liquid fuel changes the buoyancy characteristics of the vessel. The weight of the present ORC device remains constant, thereby facilitating buoyancy control of the vessel.
For those embodiments that utilize a recuperator disposed within the condenser, the present inventor provides the additional benefits of an ORC device with increase efficiency disposed within a relatively compact unit.
Yet another advantage of the present invention results from the thermal energy removed from the exhaust gases of the marine vessel power plant. The mass flow of the exhaust is a function of the volumetric flow and density of the exhaust The present method and apparatus enables the exhaust gases to be significantly cooled and consequently the density of the exhaust gases increased. As a result, the mass flow is substantially decreased, and the required size of the marine power plant exhaust duct is substantially less.

These and other objects, features and advantages of the present invention will become apparent in light of the detailed description of the best mode embodiment thereof, as illustrated in the accompanying drawings.

### BRIEF DESCRIPTION OF THE DRAWINGS

FIG. 1 is a diagrammatic perspective view of an embodiment of the present invention ORC device, having a single turbo-generator.

FIG. 2 is a diagrammatic perspective view of an embodiment of the present invention ORC device, having a pair of turbo-generators.

FIG. 3 is a diagrammatic perspective view of an embodiment of the present invention ORC device, having three turbo-generators and a single condenser.

FIG. 4 is a diagrammatic perspective view of an embodiment of the present invention ORC device, having three turbo-generators and a pair of condensers.

FIG. 5 is a sectional planar view of a condenser.

FIG. 6 is a diagrammatic perspective view of an evaporator.

FIG. 7 is a schematic diagram of an ORC device that includes a single turbo-generator.

FIG. 8 is a schematic diagram of an ORC device that includes a pair of turbo-generators.

FIG. 9 is a schematic diagram of an ORC device that includes three turbo-generators.

FIG. 10 is a schematic diagram of an ORC device that includes three turbo-generators and a pair of condensers.

FIG. 11 is a diagrammatic pressure and enthalpy curve illustrating the Rankine Cycle.

### DETAILED DESCRIPTION OF THE INVENTION

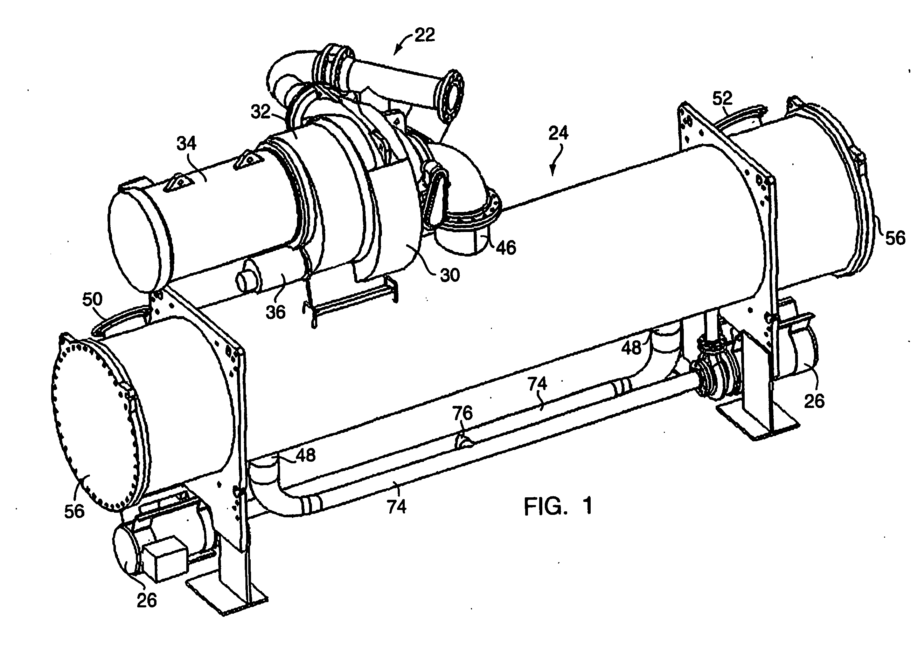

Referring to FIGS. 1 - 6, the present method for utilizing waste heat includes an organic Rankine cycle (ORC) device 20 for waste heat utilization. The ORC device 20 includes a pair of refrigerant feed pumps 26 and at least one of each of the following: 1) a turbine coupled with an electrical generator (together hereinafter referred to as the "turbo-generator 22"); 2) a condenser 24; 3) an evaporator 28; and 4) a control system. The ORC device 20 is preferably a closed "hermetic" system with no fluid makeup. In the event of leaks, either non-condensables are automatically purged from the device 20 or charge is manually replenished from refrigerant gas cylinders.

The ORC device 20 uses a commercially available refrigerant as the working medium. An example of an acceptable working medium is R-245fa (1,1,1,3,3, pentafluoropropane). R-245fa is a non-flammable non-ozone depleting fluid. R-245fa has a saturation temperature near 300 °F (149°C) and 300 PSIG (2.07MPa) that allows capture of waste heat over a wide range of IGT exhaust temperatures.

Now referring to FIGS. 1 - 4, the turbo-generator includes a single-stage radial inflow turbine 30 that typically operates at about 18000 rpm, a gearbox 32 with integral lubrication system, and an induction generator 34 operating at 3600 rpm. The gearbox 32 includes a lubrication system. In some instances, the gearbox lubrication system is integral with the gearbox 32.

In one embodiment, the turbo-generator 22 is derived from a commercially available refrigerant compressor-motor unit; e.g., a Carrier Corporation model 19XR compressor-motor. As a turbine, the compressor is operated with a rotational direction that is opposite the direction it rotates when functioning as a compressor. Modifications performed to convert the compressor into a turbine include: 1) replacing the impeller with a rotor having rotor blades shaped for use in a turbine application; 2) changing the shroud to reflect the geometry of the rotor blades; 3) altering the flow area of the diffuser to enable it to perform as a nozzle under a given set of operating conditions; and 4) eliminating the inlet guide vanes which modulate refrigerant flow in the compressor mode. To the extent that there are elements within the 19XR compressor that have a maximum operating temperature below the operating temperature of the turbine 30, those elements are replaced or modified to accommodate the higher operating temperature of the turbine 30.

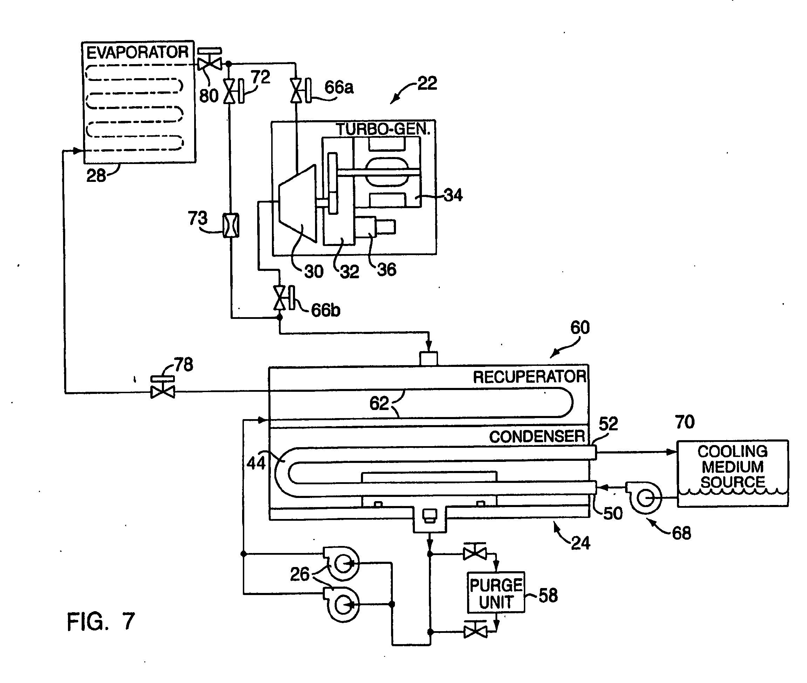

In some embodiments, the turbo-generator 22 includes peripheral components such as an oil cooler 36 (shown schematically in FIGS. 7 - 10) and oil reclaim eductor (not shown). Both the oil cooler 36 and the eductor and their associated plumbing are attached to the turbo-generator 22.

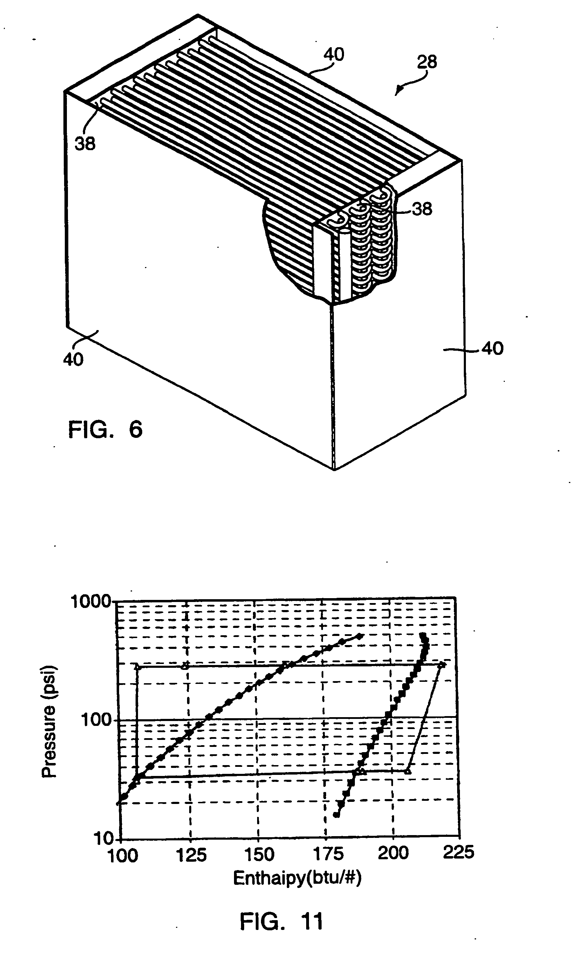

Referring to FIG. 6, a number of different evaporators 28 can be used with the ORC device 20. A single pressure once-through evaporator 28 with vertical hot gas flow and horizontal flow of refrigerant through fin-tube parallel circuits serviced by vertical headers is an acceptable type of evaporator 28. Examples of acceptable evaporator tube materials include carbon steel tubes with carbon steel fins, and stainless steel tubes with carbon steel fins, both of which have been successfully demonstrated in exhaust gas flows at up to 900 °F (482°C). Other evaporator tube materials may be used alternatively. Inlet header flow orifices are used to facilitate refrigerant flow distribution. Different refrigerant flow configurations through the evaporator 28 can be utilized; e.g., co-flow, co-counterflow, co-flow boiler/superheater and a counterflow preheater, etc. The present evaporator 28 is not limited to any particular flow configuration.

In all the evaporator 28 embodiments, the number of preheater tubes and the crossover point are selected in view of the desired hot gas exit temperature as well as the boiler section inlet subcooling. A pair of vertical tube sheets 38, each disposed on an opposite end of the evaporator 28, supports evaporator coils. Insulated casings 40 surround the entire evaporator 28 with removable panels for accessible cleaning.

The number of evaporators 28 can be tailored to the application. For example, if there is more than one exhaust duct, an evaporator 28 can be disposed in each exhaust duct.
More than one evaporator 28 disposed in a particular duct also offers the advantages of redundancy and the ability to handle a greater range of exhaust mass flow rates. At lower exhaust flow rates a single evaporator 28 may provide sufficient cooling, while still providing the energy necessary to power the turbo-generators 22. At higher exhaust flow rates, a plurality of evaporators 28 may be used to provide sufficient cooling and the energy necessary to power the turbo-generators 22.

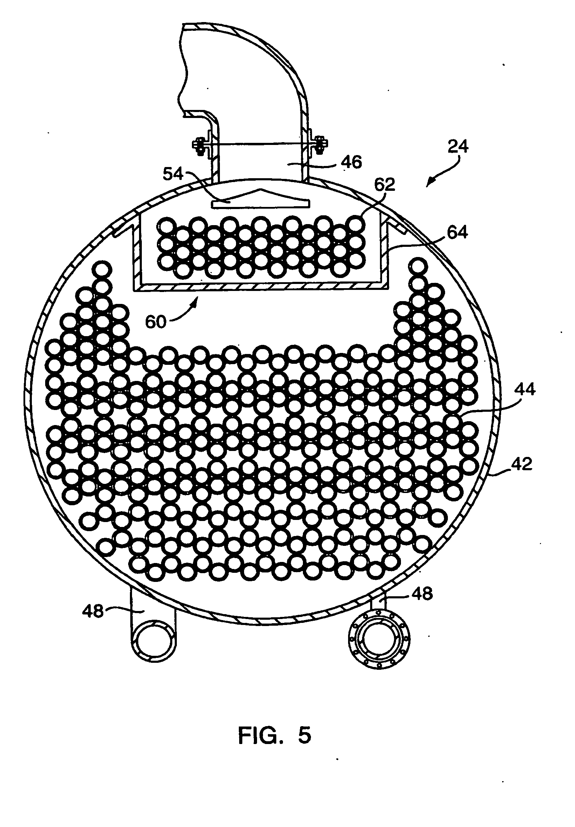

Referring to FIGS. 1 - 5, the condenser 24 is a shell-and-tube type unit that is sized to satisfy the requirements of the ORC device. The condenser 24 includes a housing 42 and a plurality of tubes 44 (hereinafter referred to as a "bank of tubes") disposed within the housing 42. The housing 42 includes a working medium inlet port 46, a working medium exit port 48, a coolant inlet port 50, and a coolant exit port 52. The coolant inlet and exit ports 50,52 are connected to the bank of tubes 44 to enable cooling fluid to enter the condenser 24 housing, pass through the bank of tubes 44, and subsequently exit the condenser housing 42. Likewise, the working medium inlet and exit ports 46,48 are connected to the condenser housing 42 to enable working medium to enter the housing 42, pass around the bank of tubes 44, and subsequently exit the housing 42. In some embodiments, one or more diffuser plates 54 (see FIG. 5) are positioned adjacent the working medium inlet 46 to facilitate distribution of the working medium within the condenser 24. In the embodiment shown in FIGS. 1 - 4, the housing 42 includes a removable access panel 56 at each axial end of the housing 42. In a preferred embodiment, one of the access panels 56 is pivotally attached to one circumferential side of the housing 42 and attachable to the opposite circumferential side via a selectively operable latch (not shown) so that the access panel 56 may be readily pivoted to provide access to the bank of tubes 44.

In some embodiments, a non-condensable purge unit 58 (shown schematically in FIGS. 7 - 9) is attached to the condenser 24. The purge unit 58 is operable to extract air and water vapor that may accumulate in the vapor region of a condenser housing 42 to minimize or eliminate their contribution to oil hydrolysis or component corrosion. The purge unit 58 is actuated only when the system controller thermodynamically identifies the presence of non-condensable gas.

Referring to FIG. 5, in some embodiments, the ORC device 20 includes a recuperator 60 for preheating the working medium prior to its entry into the evaporator 28. The recuperator 60 is operable to receive thermal energy from at least a portion of the working medium exiting the turbo-generator 22 and use it to preheat working medium entering the evaporator 28. In the embodiment shown in FIG. 5, the recuperator 60 includes a plurality of ducts 62 disposed within the housing 42 of the condenser 24. The ducts 62 are connected inline downstream of the working medium exit port 48 of the condenser 24 and upstream of the evaporator 28. A partition 64 partially surrounds the recuperator ducts 62 to separate them from the remainder of the condenser 24. Working medium enters the condenser 24 through the working medium inlet port 46 and passes through the recuperator 60 prior to entering the remainder of the condenser 24. One or more diffusers 54 can be disposed within the recuperator to facilitate distribution of the working medium within the recuperator 60. Placing the recuperator 60 within the condenser 24 advantageously minimizes the size of the ORC device 20. A recuperator 60 disposed outside of the condenser 24 can be used alternatively, however.

Referring to FIGS. 1 - 4, the ORC device 20 includes variable speed refrigerant feed pumps 26 to supply liquid refrigerant to the evaporator 28. In one embodiment, the refrigerant feed pumps 26 are turbine regenerative pumps that supply liquid refregerant to the evaporator 28 with relatively low net pump suction head (NPSH). This design, combined with the relatively low system pressure difference, allows the feed pumps 26 and condenser 24 to be mounted at the same elevation and obviates the need for separate condensate and feed pumps. In alternative embodiments, the refrigerant feed pump 26 may be side channel centrifugal pumps or an axial inlet centrifugal pumps. The refrigerant feed pumps 26 are equipped with an inverter to allow fully proportional variable speed operation across the full range of exhaust conditions. Other pump controls may be used alternatively. Applications using two or more refrigerant feed pumps 26 offer the advantage of redundancy. In some embodiments, the piping 74 disposed immediately aft of each of the feed pumps 26 are connected to one another by a cross-over piping segment 76. Multiple refrigerant feed pumps 26 and the cross-over segment 76 enhance the ability of the ORC device 20 to accommodate a marine environment having significant pitch and roll by collecting working medium at different locations in the condenser 24. ORC configurations having more than one turbo-generator 22 and more than one refrigerant feed pump 26 are provided with valves 66 (see FIGS. 7-10) that enable each turbo-generator 22 or feed pump 26 to be selectively removed from the working medium flow pattern. Alternatively, a feed pump 26 may be associated with each turbo-generator 22, and selective actuation of the associated feed pump 26 can be used to engage / disengage the associated turbo-generator 22.

The ORC device 20 shown in FIGS. 7 - 10 each includes a cooling circuit 68 used in marine applications, wherein a cooling medium (e.g., seawater) is accessed from a cooling medium source 70 (e.g., the body of water in the environment surrounding the marine vessel) and circuitously passed through the condenser 24 (via the coolant inlet and exit ports 50,52) and returned to the cooling medium source 70. In alternative embodiments, the cooling circuit 68 includcs a heat exchanger (e.g., a cooling tower) to remove thermal energy from the cooling medium.

ORC device 20 configurations are shown schematically in FIGS. 7-10. These configurations represent examples of ORC device 20 configurations and should not be interpreted as the only configurations possible within the present invention. Arrows indicate the working medium flow pattern within each configuration.

Referring to a first configuration shown in FIG. 7, beginning at a pair of refrigerant feed pumps 26, working medium is pumped toward an evaporator 28. In the embodiment shown in FIG. 7, prior to entering the evaporator 28, the working medium passes through a recuperator 60, wherein the working medium is preheated. In a marine application, the evaporator 28 is disposed within an exhaust duct that receives exhaust products from the vessel's power plant Working medium exiting the evaporator 28 subsequently travels toward the turbo-generator 22. A bypass valve 72, disposed between the evaporator 28 and the turbo-generator 22, enables the selective diversion of working medium around the turbo-generator 22 and toward the condenser 24. An orifice 73 is disposed downstream of the bypass valve 72 to produce a flow-restriction. As will be discussed below, the bypass valve 72 is operable to fully bypass working medium around the turbo-generator 22. Alternatively, the bypass valve 72 can operate to selectively vary the amount of working medium that is introduced into the turbo-generator 22. Assuming some, or all, of the working medium has not been diverted around the turbo-generator 22, the working medium enters the turbine 30 portion of the turbo-generator 22 and provides the energy necessary to power the turbo-generator 22. Once through the turbo-generator 22, the working medium travels toward the condenser 24. Working medium that is diverted around the turbo-generator 22 also travels toward the condenser 24. A perspective view of this configuration of the ORC device 20 is shown in FIG. 1, less the evaporator 28.

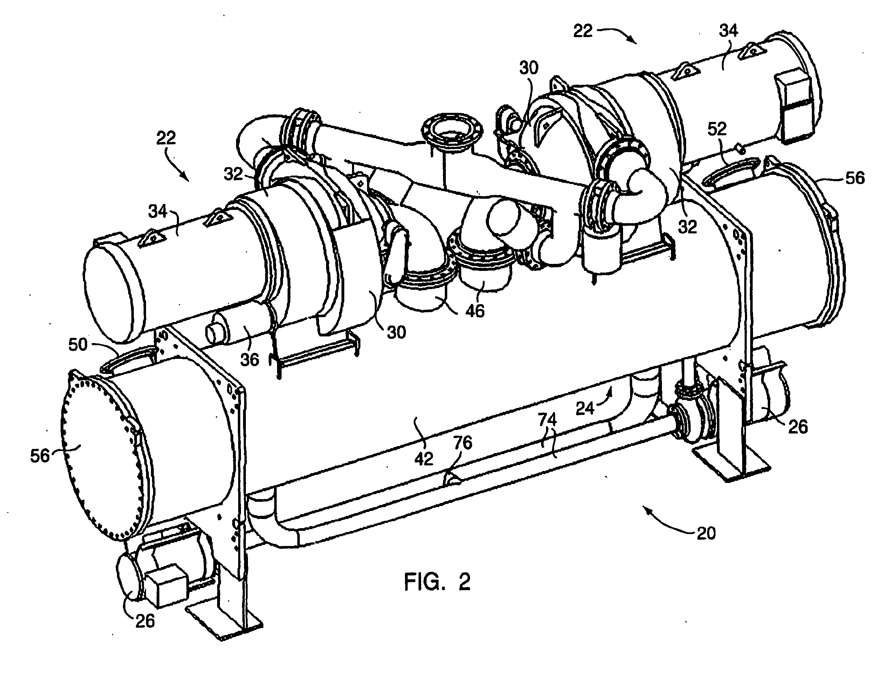

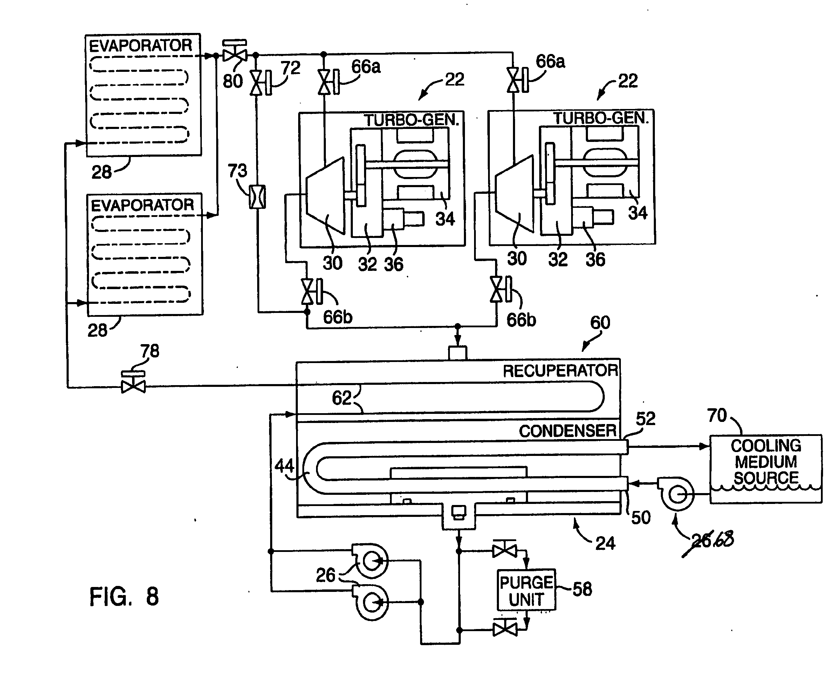

A second ORC device 20 configuration is schematically shown in FIG. 8 that includes a pair of turbo-generators 22. The turbine inlets are connected to a feed conduit from the evaporator 28. A turbine inlet valve 66a is disposed immediately upstream of each turbo-generator 22. In some embodiments, a turbine exit valve 66b is disposed immediately downstream of each turbo-generator 22. In those embodiments, a safety pressure bleed is provided connected to the low pressure side of the ORC device. The second ORC device 20 configuration also includes a plurality of evaporators 28. An evaporator inlet valve 78 is disposed immediately upstream of each evaporator 28. In some embodiments, an evaporator exit valve 80 is disposed immediately downstream of each evaporator 28. A perspective view of this configuration of the ORC device 20 is shown in FIG. 2, less the evaporator 28.

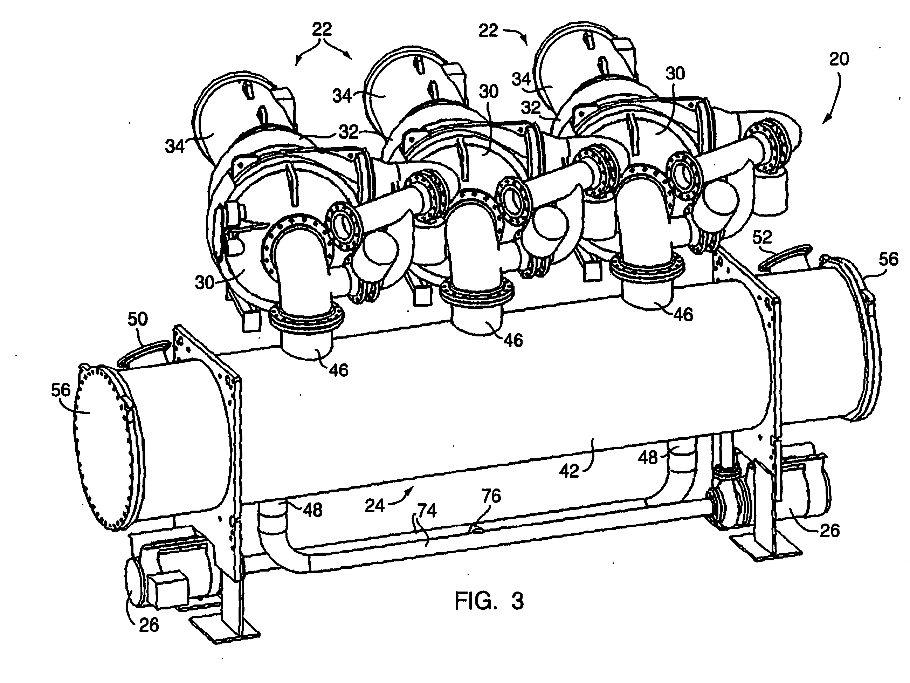

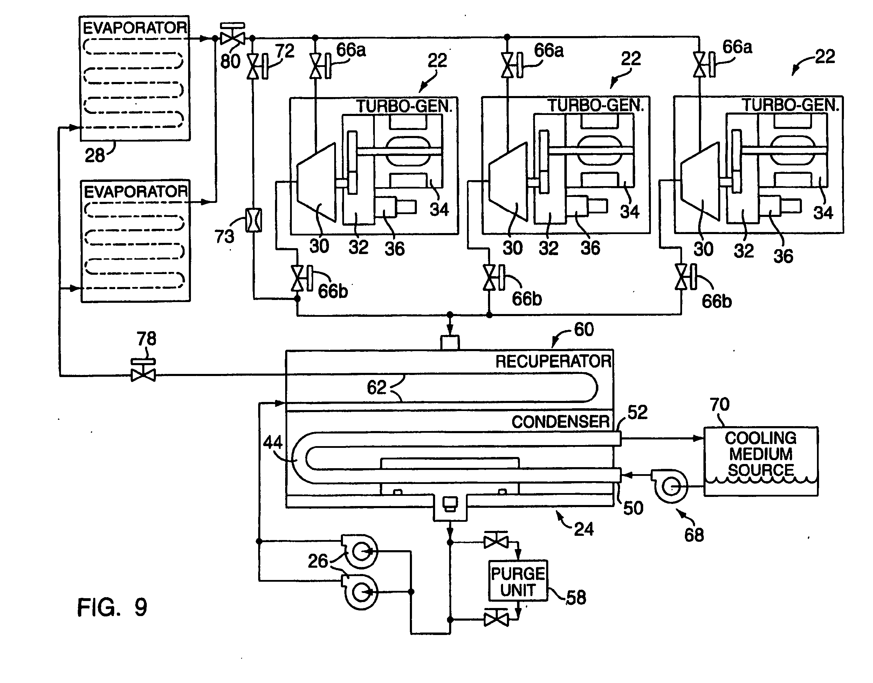

A third ORC device 20 configuration is schematically shown in FIG. 9 that includes three turbo-generators 22. A perspective view of a portion of this configuration of the ORC device 20 is shown in FIG. 3, less the evaporator 28.

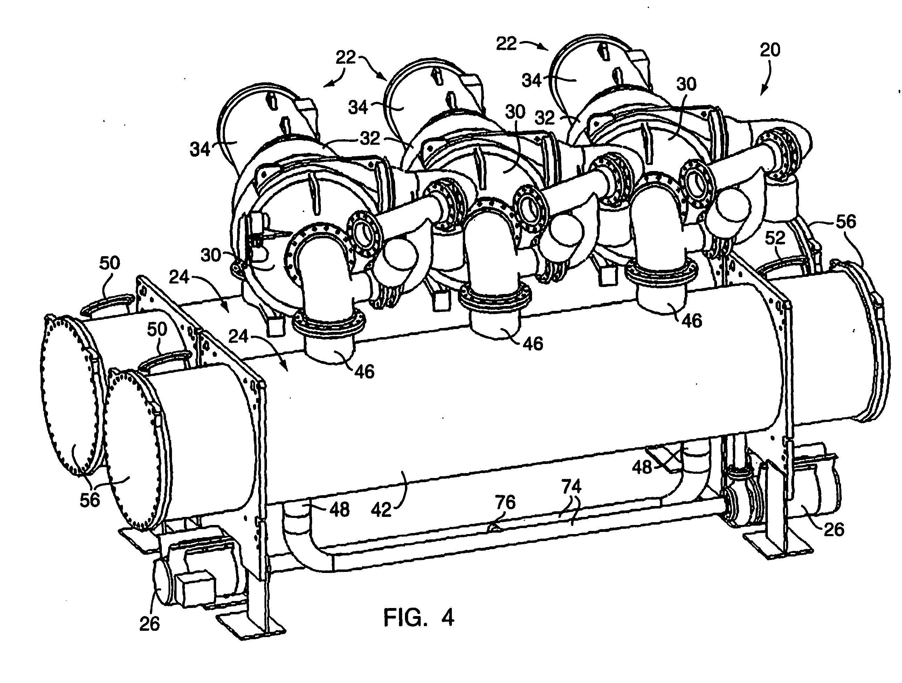

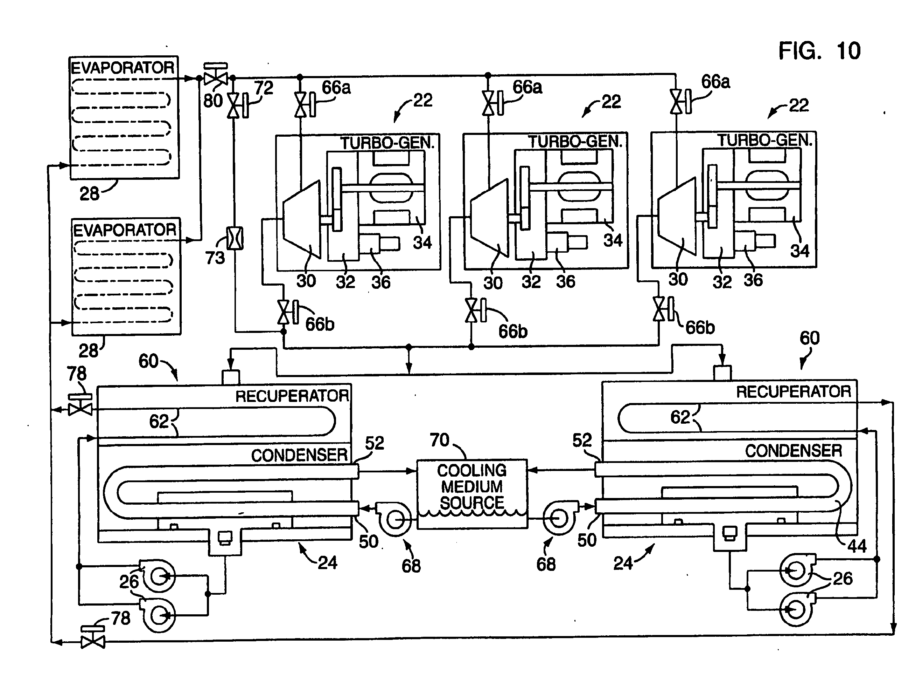

A fourth ORC device 20 configuration is schematically shown in FIG. 10 that includes three turbo-generators 22 and a pair of condensers 24. A perspective view of a portion of this configuration of the ORC device 20 is shown in FIG. 4, less the evaporator 28.

In all of the configurations, the ORC controls maintain the ORC device 20 along a highly predictable programmed turbine inlet superheat / pressure curve through the use of the variable speed feed pump 26 in a closed hermetic environment An example of such a curve is shown in FIG. 11.

The condenser load is regulated via the feed pump(s) 26 to maintain condensing pressure as the system load changes. In addition to the primary feed pump speed / superheat control loop, the ORC controls can also be used to control: 1) net exported power generation by controlling either hot gas blower speed or bypass valve 72 position depending on the application; 2) selective staging of the generator 34 and gearbox 32 oil flow; and 3) actuation of the purge unit 58. The ORC controls can also be used to monitor all ORC system sensors and evaluate if any system operational set point ranges are exceeded. Alerts and alarms can be generated and logged in a manner analogous to the operation of a commercially available chillers, with the control system initiating a protective shutdown sequence (and potentially a restart lockout) in the event of an alarm. The specific details of the ORC controls will depend upon the specific configuration involved and the application at hand. The present invention ORC device 20 can be designed for fully automated unattended operation with appropriate levels of prognostics and diagnostics.

The ORC device 20 can be equipped with a system enable relay that can be triggered from the ORC controls or can be self-initiating using a hot gas temperature sensor. After the ORC device 20 is activated, the system will await the enable signal to begin the autostart sequence. Once the autostart sequence is triggered, fluid supply to the evaporator 28 is ramped up at a controlled rate to begin building pressure across the bypass valve 72 while the condenser load is matched to the system load. When the control system determines that turbine superheat is under control, the turbine oil pump is activated and the generator 34 is energized as an induction motor. The turbine speed is thus locked to the grid frequency with no requirement for frequency synchronization. With the turbine at speed, the turbine inlet valve 66a opens automatically and power inflow to the generator seamlessly transitions into electrical power generation.

Shutdown of the ORC device 20 is equally straightforward. When the temperature of the exhaust products passing through the evaporator(s) 28 falls below the operational limit, or if superheat cannot be maintained at minimum power, the ORC controls system begins an auto-shutdown sequence. With the generator 34 still connected to the grid, the turbine inlet valve 66a closes and the turbine bypass valve 72 opens. The generator 34 once again becomes a motor (as opposed to a generator) and draws power momentarily before power is removed and the unit coasts to a stop. The refrigerant feed pump 26 continues to run to cool the evaporator 28 while the condenser 24 continues to reject load, eventually resulting in a continuous small liquid circulation through the system. Once system temperature and pressure are adequate for shutdown, the refrigerant feed pump 26, turbine oil pump, and condenser 24 are secured and the system is ready for the next enable signal.

When the autostart sequence is complete, the control system begins continuous superheat control and alarm monitoring. The control system will track all hot gas load changes within a specified turndown ratio. Very rapid load changes can be tracked. During load increases, significant superheat overshoot can be accommodated until the system reaches a new equilibrium. During load decreases, the system can briefly transition to turbine bypass until superheat control is re-established. If the supplied heat load becomes too high or low, superheat will move outside qualified limits and the system will (currently) shutdown. From this state, the ORC device 20 will again initiate the autostart sequence after a short delay if evaporator high temperature is present.

Although this invention has been shown and described with respect to the detailed embodiments thereof, it will be understood by those skilled in the art that various changes in form and detail thereof may be made without departing from the scope of the invention as defined in the appended claims.

## Claims

1. An apparatus for generating power using exhaust from a marine power plant, the apparatus comprising:
an evaporator (28) operable to be disposed within the exhaust from the marine power plant;
a turbo-generator (22) that includes a turbine (30) coupled with an electrical generator (34); and
a condenser (24); **characterised in that** said condenser (24) has a plurality of tubes (44) disposed within a housing (42), wherein the tubes (44) form a closed circuit within the housing (42) that is sized to permit a flow of coolant into and out of the condenser (24); and **in that** it further comprises:
a pair of refrigerant feed pumps (26) operable to pump refrigerant, wherein
one of the feed pumps (26) is connected to the condenser (24) adjacent a first lengthwise end of the condenser (24), and the other of the feed pumps (26) is connected to the condenser (24) adjacent a second lengthwise end of the condenser (24), opposite the first lengthwise end.

2. The apparatus of claim 1, further comprising a coolant source (70) that provides the coolant flow into and out of the condenser (24).

3. The apparatus of claim 2, wherein the coolant source (70) is environmental water.

4. The apparatus of claim 2, further comprising a selectively operable bypass valve (72) disposed within the apparatus (20) and positioned to provide a path between the evaporator (28) and the condenser (24), so that refrigerant may be selectively bypassed around the turbo-generator (22).

5. The apparatus of claim 1, 2 or 3 comprising:
one or more said evaporators (28);
a first turbo-generator (22) that includes a turbine (30) coupled with an electrical generator (34), connected to the one or more evaporators (28) to receive refrigerant from the one or more evaporators;
a second turbo-generator (22) that includes a turbine (30) coupled with an electrical generator (34), connected to the one or more evaporators (28) to receive refrigerant from the one or more evaporators; and wherein
said condenser (24) is connected to the first and second turbo-generators (22) to receive refrigerant therefrom.

6. The apparatus of claim 5, further comprising a selectively operable bypass valve (72) disposed within the apparatus and positioned to provide a path between the one or more evaporators (28) and the condenser (24), so that refrigerant may be selectively
bypassed around at least one of the first turbo-generator (22) and the second turbo-generator (22).

7. The apparatus of any preceding claim, further comprising a recuperator (60) disposed within the condenser (24), and the recuperator (60) is positioned within the apparatus such that refrigerant from the refrigerant feed pump (26) enters the recuperator (60) and refrigerant exiting the recuperator (60) passes into the evaporator (28).

8. The apparatus of any preceding claim, wherein the condenser (24) has a selectively removable access panel (56) attached to a first lengthwise end of the housing (42), wherein removal of the access panel (56) permits access to the plurality of tubes (44).

9. A method for generating power aboard a marine vessel, comprising the steps of:
providing a Rankine Cycle device (20) that includes at least one of each of an evaporator (28), a turbo-generator (22) that includes a turbine (30) coupled with an electrical generator (34), a condenser (24), and a refrigerant feed pump (26);
disposing the one or more evaporators (28) within an exhaust duct of a power plant of the marine vessel;
operating the power plant; and
selectively pumping refrigerant through the Rankine Cycle device (20);
**characterised by**:
providing a pair of the refrigerant feed pumps (26) wherein one of the feed pumps (26) is connected to the condenser (24) adjacent a first lengthwise end of the condenser (24), and the other of the feed pumps (26) is connected to the condenser (24) adjacent a second lengthwise end of the condenser (24), opposite the first lengthwise end.

10. The method of claim 9, further comprising the steps of:
disposing a selectively operable bypass valve (72) disposed within the device (20), positioned to provide a path between the one or more evaporators (28) and the condenser (24); and
selectively operating the bypass valve (72) to bypass at least a portion of the refrigerant flow around the turbo-generator (22).

11. The method of claim 10, wherein the bypass valve (72) is selectively operated to bypass refrigerant around the turbo-generator (22) during start-up of the Rankine Cycle device (20) and during shut-down of the Rankine Cycle device (20).

12. The method of claim 10, wherein the bypass valve (72) is selectively operated to bypass refrigerant around the turbo-generator (22) when the turbo-generator (22) is inoperable.

13. The method of claim 9, wherein said Rankine Cycle device (20) includes a plurality of said turbo-generators.

14. The method of claim 13, further comprising the steps of:
disposing a selectively operable bypass valve (72) disposed within the device (20), positioned to provide a path between the one or more evaporators (28) and the condenser (24); and
selectively operating the bypass valve (72) to bypass at least a portion of the refrigerant flow around the plurality of turbo-generators (22).

15. The method of claim 14, wherein the bypass valve (72) is selectively operated to bypass refrigerant around the plurality of turbo-generators (22) during start-up and shut-down of the Rankine Cycle device (20).

16. The method of claim 14, wherein the bypass valve (72) is selectively operated to bypass refrigerant around the plurality of turbo-generators (22) when the turbo-generators are inoperable.

## Patentansprüche

1. Vorrichtung zum Erzeugen von Energie unter Verwendung von Abgas von einem marinen Kraftwerk, wobei die Vorrichtung aufweist:
einen Verdampfer (28), der in dem Abgas von dem marinen Kraftwerk angeordnet werden kann;
einen Turbogenerator (22), der eine mit einem elektrischen Generator (34) gekoppelte Turbine (30) aufweist;
einen Kondensator (24);
**dadurch gekennzeichnet, dass** der Kondensator (24) eine Mehrzahl von Rohren (44) aufweist, die in einem Gehäuse (42) angeordnet sind,
wobei die Rohre (44) einen geschlossenen Kreislauf innerhalb des Gehäuses (42) bilden, der dafür bemessen ist, eine Kühlmittelströmung in den Kondensator (24) hinein und aus diesem heraus zu ermöglichen; und dass die Vorrichtung ferner aufweist:
ein Paar Kältemittel-Förderpumpen (26), die zum Pumpen von Kältemittel betreibbar sind, wobei die eine der Förderpumpen (26) mit dem Kondensator (24) benachbart einem ersten Längsende des Kondensators (24) verbunden ist und die andere der Förderpumpen (26) mit dem Kondensator (24) benachbart einem zweiten Längsende des Kondensators (24) verbunden ist, das dem ersten Längsende gegenüberliegt.

2. Vorrichtung nach Anspruch 1,
weiterhin mit einer Kuhlmittelquelle (70), die die Kühlmittelströmung in den Kondensator (24) hinein sowie aus diesem heraus bereitstellt.

3. Vorrichtung nach Anspruch 2,
wobei es sich bei der Kühlmittelquelle (70) um Wasser aus der Umgebung handelt.

4. Vorrichtung nach Anspruch 2,
weiterhin aufweisend ein selektiv betätigbares Umgehungsventil (72), das in der Vorrichtung (20) angeordnet ist und positioniert ist, um einen Weg zwischen dem Verdampfer (28) und dem Kondensator (24) bereitzustellen, so dass Kältemittel selektiv um den Turbogenerator (22) herumgeleitet werden kann.

5. Vorrichtung nach Anspruch 1, 2 oder 3, aufweisend:
einen oder mehrere der Verdampfer (28);
einen ersten Turbogenerator (22), der eine mit einem elektrischen Generator (34) gekoppelte Turbine (30) beinhaltet und mit dem einen oder den mehreren Verdampfern (28) verbunden ist, um Kältemittel von dem einen oder den mehreren Verdampfern zu erhalten;
einen zweiten Turbogenerator (22), der eine mit einem elektrischen Generator (34) gekoppelte Turbine (30) beinhaltet und mit dem einen oder den mehreren Verdampfern (28) verbunden ist, um Kältemittel von dem einen oder den mehreren Verdampfern zu erhalten; und
wobei der Kondensator (24) mit dem ersten und dem zweiten Turbogenerator (22) verbunden ist, um Kältemittel von diesen zu erhalten.

6. Vorrichtung nach Anspruch 5,
weiterhin aufweisend ein selektiv betätigbares Umgehungsventil (72), das in der Vorrichtung angeordnet ist und positioniert ist, um einen Weg zwischen dem einen oder den mehreren Verdampfern (28) und dem Kondensator (24) zu schaffen, so dass Kältemittel selektiv um mindestens einen von dem ersten Turbogenerator (22) und dem zweiten Turbogenerator (22) herumgeleitet werden kann.

7. Vorrichtung nach einem der vorhergehenden Ansprüche,
weiterhin aufweisend einen in dem Kondensator (24) angeordneten Rekuperator (60), wobei der Rekuperator (60) in der Vorrichtung derart angeordnet ist, dass Kältemittel von der Kältemittel-Förderpumpe (26) in den Rekuperator (60) eintritt und aus dem Rekuperator (60) austretendes Kältemittel in den Verdampfer (28) strömt.

8. Vorrichtung nach einem der vorhergehenden Ansprüche,
wobei der Kondensator (24) einen selektiv entfernbaren Zugangsdockel (56) aufweist, der an einem ersten Längsende des Gehäuses (42) angeordnet ist, wobei durch Entfernen des Zugangsdeckels (56) ein Zugang zu der Mehrzahl von Rohren (44) ermöglicht ist.

9. Verfahren zum Erzeugen von Energie an Bord eines Schiffes, das folgende Schritte aufweist:
Bereitstellen einer Rankine-Zyklus-Vorrichtung (20), die mindestens eines jeweils von einem Verdampfer (28), einem Turbogenerator (22),
der eine mit einem elektrischen Generator (34) gekoppelte Turbine (30) beinhaltet, einem Kondensator (24) und einer Kältemittel-Förderpumpe (26) aufweist:
Anordnen des einen oder der mehreren Verdampfer (28) in einem Abgaskanal eines Kraftwerks des Schiffes:
Betreiben des Kraftwerks; und
selektives Pumpen von Kältemittel durch die Rankine-Zyklus-Vorrichtung (20);
**gekennzeichnet durch**:
Bereitstellen eines Paares der Kältemittel-Förderpumpen, wobei die eine der Förderpumpen (26) mit dem Kondensator (24) benachbart einem ersten Längsende des Kondensators (24) verbunden wird und die andere der Förderpumpen (26) mit dem Kondensator (24) benachbart einem zweiten Längsende des Kondensators (24) verbunden wird, das dem ersten Längsende gegenüberliegt.

10. Verfahren nach Anspruch 9,
das ferner folgende Schritte aufweist:
Anordnen eines selektiv betätigbaren Umgehungsventils (72), das in der Vorrichtung (20) angeordnet und positioniert wird, um einen Weg zwischen dem einen oder den mehreren Verdampfern (28) und dem Kondensator (24) bereitzustellen, und
selektives Betätigen des Umgehungsventils (72), um zumindest einen Teil der Kältemittelströmung um den Turbogenerator (22) herumzuleiten.

11. Verfahren nach Anspruch 10,
wobei das Umgehungsventil (72) selektiv betätigt wird, um Kältemittel während des Hochfahrens der Rankine-Zyklus-Vorrichtung (20) sowie während des Stillstands der Rankine-Zyklus-Vorrichtung (20) um den Turbogenerator (22) herumzuleiten.

12. Verfahren nach Anspruch 10,
wobei das Umgehungsventil (72) selektiv betätigt wird, um Kältemittel um den Turbogenerator (22) herumzuleiten, wenn der Turbogenerator (22) nicht betriebsfähig ist.

13. Verfahren nach Anspruch 9,
wobei die Rankine-Zyklus-Vorrichtung (20) ein Mehrzahl der Turbogeneratoren beinhaltet.

14. Verfahren nach Anspruch 13,
das weiterhin folgende Schritte aufweist:
Anordnen eines selektiv betätigbaren Umgehungsventils (72), das in der Vorrichtung (20) angeordnet und positioniert wird, um einen Weg zwischen dem einen oder den mehreren Verdampfern (28) und dem Kondensator (24) bereitzustellen; und
selektives Betätigen des Umgehungsventils (72), um zumindest einen Teil der Kältemittelströmung um die Mehrzahl von Turbogeneratoren (22) herumzuleiten.

15. Verfahren nach Anspruch 14,
wobei das Umgehungsventil (72) selektiv betätigt wird, um Kältemittel während des Hochfahrens der Rankine-Zyklus-Vorrichtung (20) sowie während des Stillstands der Rankine-Zyklus-Vorrichtung (20) um die Mehrzahl von Turbogeneratoren (22) herumzuleiten.

16. Verfahren nach Anspruch 14,
wobei das Umgehungsventil (72) selektiv betätigt wird, um Kältemittel um die Mehrzahl von Turbogeneratoren (22) herumzuleiten, wenn die Turbogeneratoren (22) nicht betriebsfähig sind.

## Revendications

1. Appareil de génération d'énergie en utilisant l'échappement d'une unité motrice marine, l'appareil comprenant :
un évaporateur (28) qui est à même d'être disposé dans
l'échappement d'une unité motrice marine ;
un turbogénérateur (22) qui comprend une turbine (30)
couplée à un générateur électrique (34) ; et
un condenseur (24) ; **caractérisé en ce que** ledit
condenseur (24) a une pluralité de tubes (44) disposés à l'intérieur d'un logement (42), dans lequel les tubes (44) forment un circuit fermé dans le boîtier (42), qui est dimensionné pour permettre un écoulement de réfrigérant dans le condenseur (24) et hors de celui-ci ; et **en ce qu'**il comprend par ailleurs :
une paire de pompes d'alimentation en réfrigérant (26)
qui est à même de pomper du réfrigérant, dans laquelle l'une des pompes d'alimentation (26) est raccordée au condenseur (24) en position adjacente à une première extrémité longitudinale du condenseur (24), et l'autre des pompes d'alimentation (26) est raccordée au condenseur (24) en position adjacente à une seconde extrémité longitudinale du condenseur (24) opposée à la première extrémité longitudinale.

2. Appareil selon la revendication 1, comprenant en outre une source de réfrigérant (70) qui assure l'écoulement de réfrigérant dans le condenseur (24) et hors de celui-ci.

3. Appareil selon la revendication 2, dans lequel la source de réfrigérant (70) est de l'eau environnementale.

4. Appareil selon la revendication 2, comprenant par ailleurs une soupape de dérivation (72) actionnable sélectivement disposée dans l'appareil (20) et positionnée pour fournir un trajet entre l'évaporateur (28) et le condenseur (24) de sorte que le réfrigérant puisse être dévié sélectivement autour du turbogénérateur (22).

5. Appareil selon la revendication 1, 2 ou 3,
comprenant :
un ou plusieurs dits évaporateurs (28) ;
un premier turbogénérateur (22) qui comprend une
turbine (30) couplée à un générateur électrique (34) raccordé au un ou plusieurs évaporateurs (28) pour recevoir du réfrigérant provenant du un ou plusieurs évaporateurs ;
un second turbogénérateur (22) qui comprend une
turbine (30) couplée à un générateur électrique (34), raccordé au un ou plusieurs évaporateurs (28) pour recevoir du réfrigérant du un ou plusieurs évaporateurs ; et dans lequel :
ledit condenseur (24) est raccordé au premier et au second turbogénérateur (22) pour en recevoir du réfrigérant.

6. Appareil selon la revendication 5, comprenant par ailleurs une soupape de dérivation actionnable sélectivement (72) disposée dans l'appareil et positionnée pour fournir un trajet entre le un ou plusieurs évaporateurs (28) et le condenseur (24) de sorte que le réfrigérant puisse être sélectivement dévié autour d'au moins l'un du premier turbogénérateur (22) et du second turbogénérateur (22).

7. Appareil selon l'une quelconque des revendications précédentes, comprenant par ailleurs un récupérateur (60) disposé dans le condenseur (24) et le récupérateur (60) est positionné dans l'appareil de sorte que le réfrigérant provenant de la pompe d'alimentation en réfrigérant (26) pénètre dans le récupérateur (60) et que du réfrigérant sortant du récupérateur (60) passe dans l'évaporateur (28).

8. Appareil selon l'une quelconque des revendications précédentes, dans lequel le condenseur (24) a un panneau d'accès (56) sélectivement enlevable, fixé à une première extrémité longitudinale du logement (42), dans lequel le retrait du panneau d'accès (56) permet l'accès à la pluralité de tubes (44).

9. Procédé de génération d'énergie à bord d'un vaisseau de marine, comprenant les étapes consistant à :
mettre en oeuvre un dispositif à cycle de Rankine (20)
qui comprend au moins l'un de chacun d'un évaporateur (28), d'un turbogénérateur (22) qui comprend une turbine (30) couplée à un générateur électrique (34), d'un condenseur (24) et d'une pompe d'alimentation en réfrigérant (26) ;
disposer le un ou plusieurs évaporateurs (28) dans un
conduit d'échappement d'une unité motrice du vaisseau de marine ;
faire fonctionner l'unité motrice ; et
pomper sélectivement le réfrigérant à travers le
dispositif à cycle de Rankine (20) ;
**caractérisé en ce que** :
on met en oeuvre une paire de pompes d'alimentation en
réfrigérant (26), dans lesquelles l'une des pompes d'alimentation (26) est raccordée au condenseur (24) en position adjacente à une première extrémité longitudinale du condenseur (24) et l'autre des pompes d'alimentation (26) est raccordée au condenseur (24) en position adjacente à une seconde extrémité longitudinale du condenseur (24) opposée à la première extrémité longitudinale.

10. Procédé selon la revendication 9, comprenant en
outre les étapes consistant à ;
disposer une soupape de dérivation (72) actionnable
sélectivement et qui est disposée dans le dispositif (20), positionnée pour former un trajet entre le un ou plusieurs évaporateurs (28) et le condenseur (24) ; et
actionner sélectivement la soupape de dérivation (72)
pour dévier au moins une portion de l'écoulement de réfrigérant autour du turbogénérateur (22).

11. Procédé selon la revendication 10, dans lequel la soupape de dérivation (72) est actionnée sélectivement pour dévier le réfrigérant autour du turbogénérateur (22) au cours du démarrage du dispositif à cycle de Rankine (20) et au cours de l'arrêt du dispositif à cycle de Rankine (20).

12. Procédé selon la revendication 10, dans lequel la soupape de dérivation (72) est sélectivement actionnée pour dévier le réfrigérant autour du turbogénérateur (22) lorsque le turbogénérateur (22) est inopérant.

13. Procédé selon la revendication 9, dans lequel ledit dispositif à cycle de Rankine (20) comprend une pluralité desdits turbogénérateurs.

14. Procédé selon la revendication 13, comprenant par
ailleurs les étapes consistant à :
disposer une soupape de dérivation (72) actionnable
sélectivement disposée dans le dispositif (20), positionnée pour fournir un trajet entre le un ou plusieurs évaporateurs (28) et le condenseur (24) ; et
actionner sélectivement la soupape de dérivation (72)
pour dévier au moins une portion de l'écoulement de réfrigérant autour de la pluralité de turbogénérateurs (22).

15. Procédé selon la revendication 14, dans lequel la soupape de dérivation (72) est actionnée sélectivement pour dévier le réfrigérant autour de la pluralité de turbogénérateurs (22) au cours du démarrage et de l'arrêt du dispositif à cycle de Rankine (20).

16. Procédé selon la revendication 14, dans lequel la soupape de dérivation (72) est actionnée sélectivement pour dévier le réfrigérant autour de la pluralité de turbogénérateurs (22) lorsque les turbogénérateurs sont inopérants.
